# EUROPÄISCHE PATENTSCHRIFT

(11) **EP 1 861 603 B1**
(45) Veröffentlichungstag und Bekanntmachung des Hinweises auf die Patenterteilung: **29.07.2009**
(21) Anmeldenummer: 05740609.2
(22) Anmeldetag: 25.04.2005
(51) Int. Cl.: F02D 41/00, F02D 35/00

(54) **VERFAHREN ZUM STEUERN DES IM BRENNRAUM EINER BRENNKRAFTMASCHINE VORHANDENEN BRENNFÄHIGEN LUFT-KRAFTSTOFFGEMISCHES**
METHOD FOR CONTROLLING THE COMBUSTIBLE AIR/FUEL MIXTURE LOCATED INSIDE THE COMBUSTION CHAMBER OF AN INTERNAL COMBUSTION ENGINE
PROCEDE POUR REGULER LE MELANGE AIR-CARBURANT COMBUSTIBLE PRESENT DANS LA CHAMBRE DE COMBUSTION D'UN MOTEUR A COMBUSTION INTERNE

(30) Priorität: 31.03.2005 DE 102005014789
(43) Veröffentlichungstag der Anmeldung: 05.12.2007
(73) Patentinhaber: Nonox B.V., 6433 KC Hoensbroek (NL)
(72) Erfinder: UITENBROEK, Paul, 52134 Kohlscheid (DE)
(74) Vertreter: Kramer - Barske - Schmidtchen
(86) Internationale Anmeldenummer: PCT/EP2005/004424
(87) Internationale Veröffentlichungsnummer: WO 2006/102924

(56) Entgegenhaltungen:
- WO-A-99/58826
- US-A- 4 086 885
- US-A- 4 867 127
- US-A- 5 647 312

## Beschreibung

Die Erfindung betrifft ein Verfahren zum Steuern der Zusammensetzung des in einem Brennraum einer fremdgezündeten Brennkraftmaschine mit externer Gemischbildung vorhandenen, brennfähigen Luft-Kraftstoffgemisches. Die Erfindung betrifft weiter eine Vorrichtung zum Durchführen eines solchen Verfahrens.

Sowohl für den Verbrauch als auch für den Schadstoffgehalt der Abgase ist die Zusammensetzung des brennfähigen Luft-Kraftstoffgemisches im Brennraum von entscheidender Bedeutung. Insbesondere bei auf Magerbetrieb abgestimmten Brennkraftmaschinen ist eine genaue Steuerung der Gemischbildung sehr wichtig. Bei Brennkraftmaschinen mit externer Gemischbildung sind die folgenden Verfahren der Kraftstoffzumessung bekannt und gebräuchlich:

Die Kraftstoffzumessung kann zylinderselektiv dadurch erfolgen, dass der Kraftstoff in zu den einzelnen Zylindern führenden Einzelsaugrohren nahe am Einlassventil mittels dort angeordneter Kraftstoffeinblasventile zugeführt wird. Diese Kraftstoffeinblasventile funktionieren üblicherweise derart, dass zwischen zwei Stellungen - Ventil "voll auf" und Ventil "voll zu" - umgeschaltet werden kann und die eingeführte Kraftstoffmenge ausschließlich durch Beeinflussung der Zeitdauer der Öffnung sowie gegebenenfalls der Phasenlage dieser Öffnung relativ zur Phasenlage der Öffnung des eigentlichen Einlassventils verändert wird. Damit kann zwar rasch auf unterschiedliche Mengenanforderungen reagiert werden, d.h. das System arbeitet hochdynamisch. Aufgrund der Tatsache, dass die in den Zylinder einströmende Gemischmasse den durch die Kurbeltriebauslegung vorgegebenen Kolbenbewegungsfunktionen folgt, der Kraftstoffmassenstrom jedoch bei gleichbleibender Last konstant bleibt, ergibt sich innerhalb des Brennraums eine verhältnismäßig inhomogene Gemischzusammensetzung. Dies führt insbesondere an der Magerlaufgrenze zu großen Standardabweichungen im Zylindermitteldruck und zu hohen NOx-Emissionen.

Bei dem anderen Verfahren der Kraftstoffzumessung erfolgt die Kraftstoffzumessung verhältnismäßig weit von den eigentlichen Einlassventilen entfernt zentral für alle Zylinder. Somit existiert zwischen der Kraftzumessungsstelle und den Einlassventilen ein Puffervolumen, wodurch zwar eine gute Homogenität des einströmenden Luft-Kraftstoffgemisches erzielt wird, wobei doch wegen des langen Weges zwischen der Kraftstoffzumessstelle und den Einlassventilen die Dynamikfähigkeit begrenzt ist, d.h. die Zusammensetzung des einströmenden Luft-Kraftstoffgemisches nur mit einer gewissen Verzögerung an unterschiedliche Anforderungen angepasst werden kann.

Aus der US 4,086,885, von der im Oberbegriff des neuen Anspruchs 1 ausgegangen wird, ist eine Gemischbildungsvorrichtung bekannt, bei der sich am Kraftstoffaustritt eines Vergasers eine Kraftstoffmenge mit tangential an einer Öffnung entlang strömender Luft mischt, wobei die Aufteilung der einströmenden Luftmenge in eine Luftströmung, die längs der Öffnung strömt, und eine Strömung, die an der von der Öffnung abgewandten Seite des Saugrohrs strömt, von der Stellung einer Klappe abhängig ist, die wiederum von einer Unterdruckdose gesteuert wird, deren Unterdruck von der Strömung durch das Saugrohr bestimmt wird. Die Unterdruckdose bestimmt auch das Verhältnis zwischen der aus der Öffnung austretenden Kraftstoffmenge und der an der Öffnung vorbeiströmenden Luftmenge. Die Aufteilung des strömungsabwärts der Öffnung befindlichen Luft-Kraftstoffgemisches, das zumindest bei kleinen Luftströmungsgeschwindigkeiten in der Nähe der Öffnung deutlich fetter ist als von der Öffnung entfernt, wird von einer Klappe und zwei Drosselklappen gesteuert, die von einem Gaspedal betätigt in einem zumindest bei kleinen Luftdurchsätzen ein fettes Gemisch führenden Einlasskanal und einem weiteren Einlasskanal angeordnet sind.

In der US-A-4 867 127 ist eine Vorrichtung zur Steuerung der Zusammensetzung einer einer Brennkraftmaschine zugeführten Ladung beschrieben, bei der Gas und Luft in einem Mischer in einem konstanten Verhältnis gemischt werden und der Brennkraftmaschine durch einen Verdichter, einen Kühler und eine Drosselklappe hindurch zugeführt werden. Der Mischer wird von einer Bypassleitung umgangen, durch die Luft strömt, die dem Luft-Gasgemisch strömungsoberhalb des Verdichters zugeführt wird. In der Bypassleitung ist ein steuerbares Ventil angeordnet, das abhängig von der Leistung der Brennkraftmaschine sowie dem Druck und der Temperatur des der Brennkraftmaschine zugeführten Gemisches gesteuert wird. Der Druckschrift lässt sich kein Hinweis auf zwei voneinander getrennte Gemischerzeugungseinrichtungen oder auf zwei Einrichtungen zum Zuführen unterschiedlicher Gemische zu je einem Einlass der Brennkraftmaschine entnehmen.

Die WO 99/58826 A beschreibt einen mit Abgasrückführung arbeitenden Motor, wobei das Abgas vom Auslasskanal in den Einlasskanal stromabwärts der Drosselklappe und strömungsoberhalb eines Einspritzventils rückgeführt wird. In der Rückführleitung ist ein steuerbares Ventil angeordnet.

Der Erfindung liegt die Aufgabe zugrunde, eine Möglichkeit zu schaffen, mit der die Zusammensetzung des im Brennraum einer fremdgezündeten Brennkraftmaschine mit externer Gemischbildung vorhandenen, brennfähigen Luft-Kraftstoffgemisches möglichst genau und/oder rasch an unterschiedliche Erfordernisse angepasst werden kann.

Eine erste Lösung dieser Aufgabe wird mit einem Verfahren gemäß dem Anspruch 1 gelöst.

Die Ansprüche 2 bis 5 kennzeichnen vorteilhafte Weiterbildungen des erfindungsgemäßen Verfahrens.

Eine weitere Lösung der Erfindungsaufgabe wird mit einer Vorrichtung gemäß dem Anspruch 6 erzielt, die mit den Merkmalen der Ansprüche 7 bis 16 in vorteilhafter Weise weitergebildet wird.

Die Erfindung ist insbesondere für aufgeladene Gasmotoren geeignet, d.h. für Motoren, denen verdichtete Frischluft bzw. verdichtetes Frischgemisch aus Luft und Gas zugeführt wird.

Die Erfindung wird im Folgenden anhand schematischer Zeichnungen beispielsweise und mit weiteren Einzelheiten erläutert.

In den Figuren stellen dar:
- Figur 1: eine Prinzipansicht einer erfindungsgemäßen mehrzylindrischen Hubkolben-brennkraftmaschine und
- Figur 2: eine Prinzipschnittansicht eines in der Brennkraftmaschine gemäß Figur 1 einsetzbaren Steuerventils.

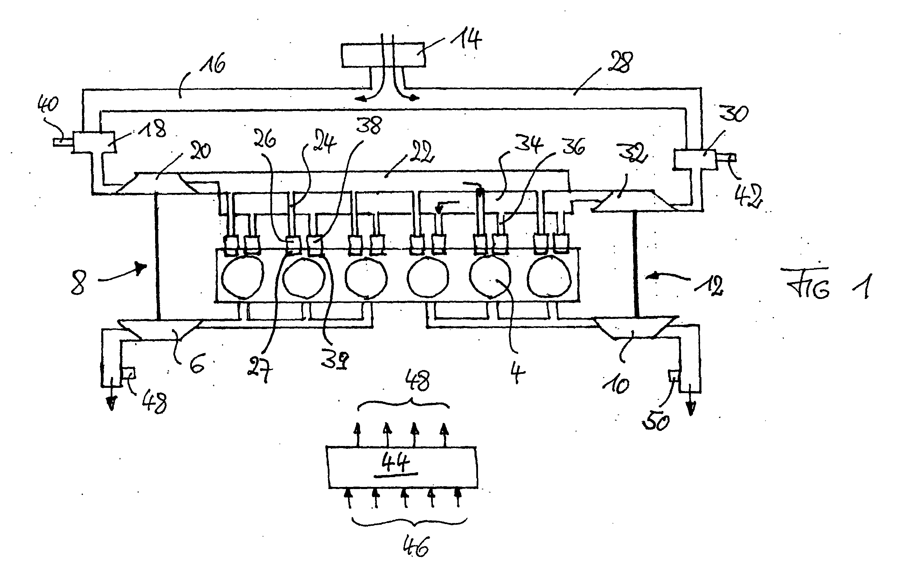

Gemäß Figur 1 weist die beispielhaft dargestellte Hubkolbenbrennkraftmaschine sechs in Reihe angeordnete Zylinder 4 auf, von denen jeder zwei nicht dargestellte, im Allgemeinen von Nockenwellen betätigte Einlassventile und ein ebenfalls nicht dargestelltes Auslassventil hat.

Abgasleitungen der gemäß Figur 1 linken drei Zylinder 4 führen in eine Abgasturbine 6 eines ersten Abgasturboladers 8. Abgasleitungen der gemäß Figur 1 rechten drei Zylinder 4 führen in eine Abgasturbine 10 eines zweiten Abgasturboladers 12.

Von einem Luftfilter 14 führt eine erste Leitung 16 durch eine erste Kraftstoffzumesseinrichtung 18 hindurch zu einer Laderturbine 20 des Abgasturboladers 8. Der Ausgang der Laderturbine 20 führt in ein erstes Sammelrohr 22, von dem aus Einzelsaugrohre 24 durch jeweilige Steuerventile 26 hindurch zu einem Einlass in den jeweiligen Zylinder führen, in dem in an sich bekannter Weise ein normalerweise als Tellerventil ausgebildetes Einlassventil 27 bzw. Ladungswechselventil arbeitet.

Von dem Luftfilter 14 führt eine weitere Leitung 28 durch eine Kraftstoffzumesseinrichtung 30 hindurch zu der Laderturbine 22 des Abgasturboladers 12. Der Ausgang der Laderturbine 32 ist mit einem weiteren Sammelrohr 34 verbunden, von dem aus Einzelzylindersaugrohre 36 durch jeweilige Steuerventile 38 hindurch zu dem jeweils anderen Einlass eines jeweiligen Zylinders 4 führt, in dem das andere Einlassventil 39 arbeitet.

In jeder der Kraftstoffzumesseinrichtungen 18 und 30 ist ein Kraftstoffzumessventil 40 bzw. 42 angeordnet, mittels dessen der durchströmenden Frischluft Kraftstoff in von dem Luftdurchsatz abhängiger Menge derart zugeführt wird, dass strömungsabwärts der jeweiligen Kraftstoffzumesseinrichtung 18 bzw. 30 ein vorbestimmtes Luft-Kraftstoffverhältnis vorliegt. Solche Kraftstoffzumesseinrichtungen sind allgemein bekannt und werden daher nicht erläutert. Der Luftdurchsatz (Mengendurchsatz) wird gemessen und das jeweilige Kraftstoffzumessventil 40 bzw. 42 wird derart gesteuert, dass abhängig vom vorbestimmten Luftdurchsatz und einem einzuhaltenden Massenverhältnis zwischen Luft und Kraftstoff eine entsprechende Kraftstoffmenge zugemessen wird. Jede der Kraftstoffzumesseinrichtungen 18 und 30 bildet somit zusammen mit der Leitung 16 bzw. 28 eine Gemischbildungseinrichtung zur Erzeugung von Gemisch, das der jeweiligen Laderturbine 20 bzw. 32 und aus dieser dem jeweiligen Sammelrohr 22 bzw. 34 zugeführt wird. Dadurch, dass die jeweilige Kraftstoffzumesseinrichtung strömungsoberhalb der Laderturbine angeordnet ist, erfolgt in der Laderturbine eine ausgezeichnete Homogenisierung des Gemisches, wobei für die Homogenisierung zusätzlich vorteilhaft ist, dass die in Folge der öffnenden Einlassventile strömungsabwärts der jeweiligen Laderturbine pulsierende Strömung strömungsaufwärts der Laderturbine geglättet ist.

Die Steuerung bzw. Regelung des Luft-Kraftstoffverhältnisses des in die Zylinder 4 einströmenden Gemisches erfolgt dadurch, dass in den beiden Kraftstoffzumesseinrichtungen 18 und 30 der durchströmenden Frischluft unterschiedliche Mengen an Kraftstoff zugesetzt werden, so dass beispielsweise im Sammelrohr 22 ein fettes Gemisch und im Sammelrohr 34 ein mageres Gemisch vorhanden ist. Das fette Gemisch hat beispielsweise ein Luft-zu-Kraftstoff-Verhältnis von bezogen auf das stöchiometrische Verhältnis 0,9 und das magere Luft-Kraftstoffgemisch hat ein Verhältnis von bezogen auf das stöchiometrische Verhältnis 1,1. Vorteilhafterweise ist die fette Gemischzusammensetzung wenigstens so fett, wie das fetteste, zum Fahren benötigte Gemisch. Das magere Luft-Kraftstoffverhältnis ist vorteilhafterweise mindestens so mager, wie das magerste, für den Betrieb benötigte Gemisch.

Die Einstellung des Luft-Kraftstoffverhältnisses innerhalb der Zylinder erfolgt mit Hilfe von Steuerventilen 26 und 38, die unmittelbar vor den jeweiligen Einlassventilen 27 bzw. 39 angeordnet sind und das Mengenverhältnis und bevorzugt auch die Menge des bei einem Ansaughub in den Zylinder einströmenden Luft-Kraftstoffgemisches bestimmen. Strömen gleiche Mengen ein, liegt im beschriebenen Beispiel das Luft-Kraftstoffverhältnis im Zylinder bei 1. Strömt nur fettes Gemisch ein, liegt es bei 0,9; strömt nur mageres Gemisch ein, liegt es bei 1,1.

Zur Steuerung der Kraftstoffzumessventile 40 und 42 sowie der Steuerventile 26 und 38 dient eine elektronische Steuereinrichtung 44, die in an sich bekannter Weise einen Mikroprozessor mit Programm- und Datenspeicher enthält. Eingänge 46 der elektronischen Steuereinrichtung sind mit Sensoren verbunden, die die für die Menge und die Zusammensetzung des den Zylindern zuzuführenden Luft-Kraftstoffgemisches relevante Signale liefern. Aus diesen Signalen werden an Ausgängen 48 liegende Ausgangssignale zur Ansteuerung der Kraftstoffzumessventile 40 und 42 und der Steuerventile 26 und 38 erzeugt, wobei die Steuerventile 26 und 38 zylinderselektiv angesteuert werden.

Die Ansteuerung der Kraftstoffzumessventile 40 und 42 sowie der Steuerventile 26 und 38 kann gesteuert oder unter Nutzung einer Rückkopplung geregelt erfolgen, indem die Signale von Abgassensoren 48 und 50, mit denen beispielsweise der Sauerstoffgehalt im Abgas ermittelt wird, den Eingängen 46 der Steuereinrichtung 44 zugeführt werden.

Im dargestellten Beispiel können die herkömmlichen Einlassventile, die unmittelbar an den Brennraum grenzen, rein mechanisch von der Kurbelwelle über eine Nockenwelle sowie gegebenenfalls einen Phasensteller betätigt werden, so dass sich deren Öffnungszeit und Hub nicht in Abhängigkeit von der Last ändern, sondern gegebenenfalls nur in der Phase relativ zur Kurbelwelle verschoben werden.

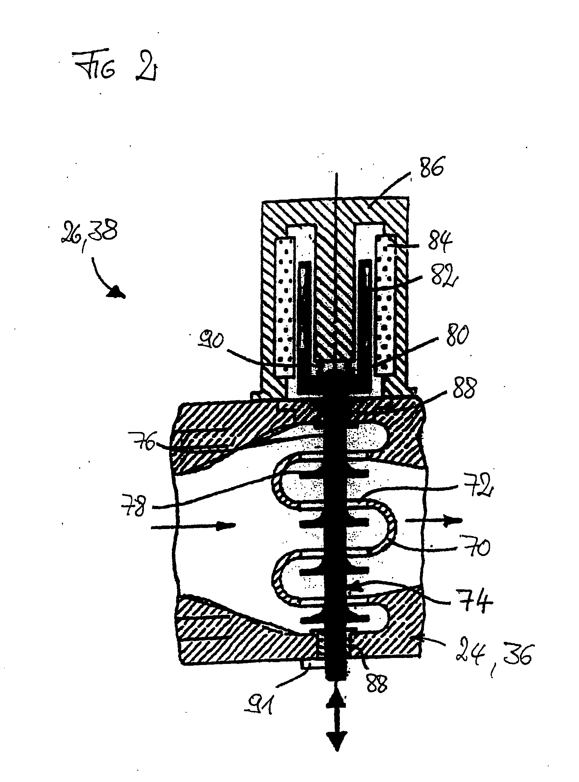

Die Steuerventile 26 und 38 sind vorteilhafterweise derart gebaut, dass sich ihre Öffnungs-und Schließzeitpunkte sowie gegebenenfalls auch ihr Öffnungshub frei steuern lässt. Figur 2 zeigt einen Schnitt durch ein beispielhaftes Steuerventil 26 bzw. 38.

Das zum Zylinder führende Einzelzylindersaugrohr 24 bzw. 36 weist eine im Längsschnitt durch das Saugrohr mäanderförmige Trennwand 70 auf, in der quer zur Axialrichtung des Saugrohrs im dargestellten Beispiel vier Ventilöffnungen 72 ausgebildet sind. Quer durch das Saugrohr und die Ventilöffnungen hindurch erstreckt sich ein insgesamt mit 74 bezeichnetes Ventilglied, das einen Schaft 76 und daran starr angebrachte, den Schaft umschließende Scheiben 78 aufweist. Die Anordnung ist derart, dass sich in der in Figur 2 dargestellten, geöffneten Stellung des Ventils oberste und drittoberste Scheiben 78 bezogen auf die Einlassströmung durch das Saugrohr strömungsabwärts der zugehörigen Ventilöffnungen 72 befinden und die beiden anderen Scheiben 78 sich strömungsoberhalb der zugehörigen Ventilöffnungen 72 befinden. Der Durchmesser der Scheiben 78 entspricht etwa dem Durchmesser der Ventilöffnungen 72, so dass das Ventil geschlossen ist, wenn sich der Schaft 76 zusammen mit den Scheiben 78 gemäß Figur 2 soweit aufwärts bewegt hat, dass sich die Scheiben 78 innerhalb der Öffnungen 72 befinden. Die Scheiben 78 sind vorteilhafterweise strömungsgünstig geformt.

Zur Betätigung des Steuerventils weist der Schaft 76 außerhalb des Saugrohrs einen zylindrischen Ansatz 80 auf, in dem eine Spule 82 aufgenommen ist, die von einem Elektromagneten 84 umschlossen wird, der in einem am Saugrohr befestigten Gehäuse 86 aufgenommen ist.

Der Schaft 76 ist im Saugrohr in Buchsen 88 längs verschiebbar geführt. Der zylindrische Ansatz 80 ist derart ausgebildet, dass die Hubbewegung des Schaftes 76 bzw. des Ventilglieds 74 durch seinen Anschlag einerseits an der Außenseite des Saugrohrs und andererseits an einem in ihn einragenden Ansatz des Gehäuses 86 begrenzt ist.

Eine Feder 90 drängt das Ventilglied 74 in seine offene Stellung.

### Die Funktion des beschriebenen Steuerventils ist wie folgt:

Die Spule 82 ist an die Steuereinrichtung 44 angeschlossen. Das Ventil ist unter Wirkung der Feder 90 normalerweise offen. Durch Beaufschlagung der Spule 82 mit Strom wird das Ventilglied gemäß Figur 2 nach oben in einer Stellung bewegt, in der sich die Scheiben 78 innerhalb der Ventilöffnungen 72 befinden und diese verschließen. Wie ersichtlich, wirkt in der Schließstellung des Ventils, wenn beispielsweise linksseitig des Ventils ein Überdruck herrscht, dieser Überdruck auf die oberste und die drittoberste Scheibe derart, dass das Ventilglied nach unten gedrückt wird, wohingegen der Überdruck auf die unterste und drittunterste Scheibe derart wirkt, dass er das Ventilglied nach oben drückt, so dass das Ventilglied insgesamt unabhängig von der Druckdifferenz Kräfte freilässt.

Ein Vorteil, der mit dem geschilderten Ventil erzielt wird, liegt darin, dass es außerordentlich rasch aus der Schließstellung in die Öffnungsstellung und umgekehrt bewegbar ist, so dass eine präzise Steuerung der Zeiten mit geringstmöglichen Strömungsverlusten möglich ist.

In einer bevorzugten, dargestellten Ausführungsform wirkt der Schaft 76 mit einem Stellwegsensor 91 zusammen, der Informationen über die exakte augenblickliche Position des Schaftes 76 und damit der Scheiben 78 liefert. Die Steuereinrichtung 44 regelt den Strom durch die Spule 82 derart, dass die Ist-Position des Ventilkörpers 76, 78 zu jedem Zeitpunkt der von der Steuereinrichtung vorgegebenen und dort programmierten Soll-Position entspricht. Somit können nicht nur der Öffnungs- und Schließzeitpunkt des Steuerventils, sondern auch dessen Hub frei gesteuert werden.

Wenn die in den Zylinder einströmenden Gemischmengen ausschließlich durch den Hub der Steuerventile 26 und 38 gesteuert werden und deren Öffnungs- und Schließzeitpunkte gleich sind, ergibt sich vorzugsweise eine sehr homogene Zusammensetzung des Gemisches im Brennraum. Wenn die Volumenströme durch die Steuerzeiten der Steuerventile beeinflusst werden, können zusätzliche stärkere Schichtladeeffekte erzielt werden, indem beispielsweise das magere Gemisch zeitlich vor dem fetten Gemisch einströmt.

Die beschriebenen Steuerventile sind aus dem europäischen Patent EP 1 236 875 B1 bekannt. Sie können nicht nur zur Steuerung der Menge und darüber auch der Zusammensetzung des Gemisches im Brennraum benutzt werden, sondern auch für eine weitere Verminderung der Ladungswechselverluste im Teillastbereich durch die in der genannten Druckschrift beschriebene Teillastresonanzaufladung.

Die Erfindung kann in vielfältiger Weise abgeändert werden.

Beispielsweise sind die Turbolader nicht zwingend und die Erfindung kann auch an Saugmotoren eingesetzt werden. Bei Turbomotoren können beide Laderturbinen von einer gemeinsamen Abgasturbine angetrieben werden, durch die das gesamte Abgas der Brennkraftmaschine strömt. Des weiteren können fremd angetriebene Lader verwendet werden.

Die Steuerventile 26 und 38 sind nicht zwingend erforderlich. Die Steuerung der Menge und der Zusammensetzung des in die Zylinder einströmenden Gemisches kann auch durch eine entsprechende Ausbildung der unmittelbar an den Brennraum grenzenden Einlassventile 27, 39 gesteuert werden. Weiter ist es möglich, die Steuerventile durch in den Einzelzylindersaugrohren enthaltene Drosselklappen zu ersetzen und diese in entsprechender Weise zu öffnen. Auch die Einzeldrosselklappen sind nicht zwingend erforderlich. Sie können jeweils durch eine Drosselklappe in den Leitungen 16 und 28 ersetzt werden.

Die Steuerventile können einen anderen als den geschilderten Aufbau haben, beispielsweise als Drehschieberventil ausgebildet sein, dessen Öffnungsquerschnitt mit Hilfe eines Schrittschaltmotors sowohl hinsichtlich Öffnungsbeginn und Schließbeginn als auch hinsichtlich Öffnungsquerschnitt verändert werden kann.

Die Gemischzusammensetzung im Saminelrohr 22 und im Sammelrohr 34 kann im Betriebsverlauf geändert werden. Beispielsweise kann das magere Gemisch auf unendlich mager eingestellt werden (keine Kraftstoffzumessung). Dadurch ist es möglich, bei geeignet eingestellten Steuerzeiten der Steuerventile während der ersten Phase des Ansaugens, während der die Einlassventile überschneiden, den Zylinderbrennraum ausschließlich mit dem reine Luft führenden Einzelzylindersaugrohr zu verbinden und erst anschließend durch das andere Saugrohr hindurch Gemisch in den Zylinder zu leiten. Dadurch kann ein Überströmen von Gemisch bzw. Kraftstoff in den Auslasstrakt hinein während der Ventilüberschneidungsphase der Hauptventile verhindert werden.

Insgesamt bietet die Erfindung vielfältige Möglichkeiten zur Verbesserung des Betriebsverhaltens im Hinblick auf Drehmoment- und Leistungsentfaltung, Wirkungsgrad und Abgasqualität. Die Erfindung eignet sich besonders gut zur Verwendung in Gasmotoren, bei denen über die Kraftstoffzumessventile 40 und 42 Brenngas eingeleitet wird.

### Bezugszeichenliste

- 4: Zylinder
- 6: Abgasturbine
- 8: Abgasturbolader
- 10: Abgasturbine
- 12: Abgasturbolader
- 14: Luftfilter
- 16: Leitung
- 18: Kraftstoffzumesseinrichtung
- 20: Laderturbine
- 22: Sammelrohr
- 24: Einzelzylindersaugrohr
- 26: Steuerventil
- 27: Einlassventil
- 28: Leitung
- 30: Kraftstoffzumesseinrichtung
- 32: Laderturbine
- 34: Sammelrohr
- 36: Einzelzylindersaugrohr
- 38: Steuerventil
- 39: Einlassventil

- 40: Kraftstoffzumessventil
- 42: Kraftstoffzumessventil
- 44: elektronische Steuereinrichtung
- 46: Eingänge
- 48: Ausgänge
- 70: Trennwand
- 72: Ventilöffnung
- 74: Ventilglied
- 76: Schaft
- 78: Scheibe
- 80: Ansatz
- 82: Spule
- 84: Elektromagnet
- 86: Gehäuse
- 88: Buchse
- 90: Feder
- 91: Stellwegsensor

## Patentansprüche

1. Verfahren zum Steuern der Zusammensetzung des in einem Brennraum einer fremdgezündeten Brennkraftmaschine mit externer Gemischbildung vorhandenen, brennfähigen Luft-Kraftstoffgemisches derart, dass es eine vorbestimmte Zusammensetzung hat, wobei die Brennkraftmaschine eine erste Gemischerzeugungseinrichtung zur Erzeugung eines fetten Gemisches mit einem vorbestimmten Luft-Kraftstoffverhältnis und eine zweite Gemischerzeugungseinrichtung zur Erzeugung eines mageren Gemisches mit einem vorbestimmten Luft-Kraftstoffverhältnis aufweist, bei welchem Verfahren
- wenigstens zwei Fluide mit einem jeweiligen Luft-Kraftstoffverhältnis erzeugt werden,
- die Fluide dem Brennraum zugeführt werden und
- die Mengenanteile der Fluide derart gesteuert werden, dass deren Summenzusammensetzung der vorbestimmten Zusammensetzung entspricht,
**dadurch gekennzeichnet, dass** die beiden Fluide unabhängig voneinander derart erzeugt werden, dass ihr jeweiliges Luft-Kraftstoffverhältnis unabhängig von ihrem jeweiligen Durchsatz frei steuerbar ist, die beiden Fluide sich erst im Brennraum miteinander vermischen und ihre Mengensteuerung erst kurz vor oder bei deren Eintritt in den Brennraum erfolgt.

2. Verfahren nach Anspruch 1, **dadurch gekennzeichnet, dass** die Menge des bei einem Ansaughub in den Zylinder einströmenden Luft-Kraftstoffgemisches durch die Öffnungszeitdauer und gegebenenfalls zusätzlich die Öffnung von den beiden Fluiden zugeordneten, in entsprechenden Einlässen in den Brennraum angeordneten Steuerventilen gesteuert wird.

3. Verfahren nach Anspruch 1 oder 2, **dadurch gekennzeichnet, dass** ein Fluid ein fettes Luft-Kraftstoffgemisch ist und das andere Fluid ein mageres Luft-Kraftstoffgemisch ist, wobei das fette Luft-Kraftstoffgemisch einen vorbestimmten höheren Kraftstoffgehalt hat und das magere Luft-Kraftstoffgemisch einen vorbestimmten niedrigeren Kraftstoffgehalt hat als das dem Brennraum zuzuführende Gemisch mit der vorbestimmten Zusammensetzung.

4. Verfahren nach Anspruch 1 oder 2, **dadurch gekennzeichnet, dass** ein von Kraftstoff freies Fluid dem Brennraum als einziges Fluid während eines Zeitraums zugeführt wird, während dessen wenigstens ein Einlassventil und ein Auslassventil des Brennraums gleichzeitig geöffnet sind.

5. Verfahren nach einem der Ansprüche 1 bis 4, **dadurch gekennzeichnet, dass** der der Luft zugemischte Kraftstoff ein brennbares Gas ist.

6. Vorrichtung zum Steuern der Zusammensetzung des in einem Brennraum einer fremdgezündeten Brennkraftmaschine mit externer Gemischbildung vorhandenen, brennfähigen Luft-Kraftstoffgemisches derart, dass es eine vorbestimmte Zusammensetzung hat, enthaltend
- eine erste Gemischerzeugungseinrichtung (16, 18, 40) zur Erzeugung eines fetten Gemisches mit einem vorbestimmten Luft-Kraftstoffverhältnis,
- eine zweite Gemischerzeugungseinrichtung (28, 30, 42) zur Erzeugung eines mageren Gemisches mit einem vorbestimmten Luft-Kraftstoffverhältnis,
wobei beide Gemische durch Zuführen von Kraftstoff zu der Brennkraftmaschine zugeführter Frischluft erzeugt werden und das fette Gemisch einen höheren Kraftstoffanteil und das magere Gemisch einen niedrigeren Kraftstoffanteil hat als das Gemisch mit der vorbestimmten Zusammensetzung,
- eine erste Einrichtung (22, 24) zum Zuführen des fetten Gemisches zu einem in einen Brennraum der Brennkraftmaschine führenden ersten Einlass,
- eine zweite Einrichtung (34, 36) zum Zuführen des mageren Gemisches zu einem in einen Brennraum der Brennkraftmaschine führenden zweiten Einlass,
- eine im ersten Einlass arbeitende erste Ventileinrichtung (26, 27) zum Steuern der Menge des dem Brennraum zugeführten fetten Gemisches,
- eine im zweiten Einlass arbeitende zweite Ventileinrichtung (38, 39) zum Steuern der Menge des dem Brennraum zugeführten mageren Gemisches, und
- eine Steuereinrichtung (44) zur Steuerung der Ventileinrichtungen derart, dass die Summe aus der Menge des in den Brennraum strömenden fetten Gemisches und mageren Gemisches ein Gemisch mit der vorbestimmten Zusammensetzung ergibt,
**dadurch gekennzeichnet, dass** die Brennkraftmaschine mehrere Zylinder (4) und zwei einlassseitige Sammelrohre (22, 34) aufweist, von denen eines das fette und das andere das magere Gemisch führt und die über Einzelsaugrohre (24, 36) mit jeweils einem der Einlässe der Zylinder verbunden sind.

7. Vorrichtung nach Anspruch 6, wobei die Steuereinrichtung (44) die Ventileinrichtung zylinderselektiv und/oder zyklusselektiv steuert.

8. Vorrichtung nach einem der Ansprüche 6 oder 7, wobei jede der Ventileinrichtungen ein unmittelbar an den Brennraum angrenzendes Einlassventil (27, 39) und ein hinsichtlich seiner Öffnungs- und/oder Schließzeit und/oder seines Öffnungsquerschnitts unabhängig vom Einlassventil steuerbares Steuerventil (26, 38) aufweist.

9. Vorrichtung nach einem der Ansprüche 6 oder 7, wobei jede der Ventileinrichtungen ein unmittelbar an den Brennraum angrenzendes Einlassventil (27, 39) aufweist, dessen Öffnungs-und/oder Schließzeit und/oder Öffnungsquerschnitt steuerbar ist.

10. Vorrichtung nach Anspruch 8 oder 9, wobei die Steuerung der dem Brennraum zugeführten Gemischzusammensetzung **dadurch** erfolgt, dass die steuerbaren Ventile (26, 38; 27, 39) gleiche Steuerzeiten und unterschiedlichen Ventilhub aufweisen.

11. Vorrichtung nach Anspruch 8 oder 9, wobei die Steuerung der dem Brennraum zugeführten Gemischzusammensetzung **dadurch** erfolgt, dass die steuerbaren Ventile (26, 38; 27, 39) ungleiche Steuerzeiten aufweisen.

12. Vorrichtung nach einem der Ansprüche 6 bis 11, wobei jede der Gemischerzeugungseinrichtungen eine Kraftstoffzumesseinrichtung (30, 40) aufweist, die strömungsoberhalb eines Verdichters (20, 32) angeordnet ist.

13. Vorrichtung nach Anspruch 12, wobei jeder der Verdichter (20, 32) von einer vom Abgas der Brennkraftmaschine angetriebenen Abgasturbine angetrieben ist.

14. Vorrichtung nach Anspruch 8, wobei das Steuerventil (26, 38) ein Ventilglied (74) mit einem von einem Elektromagneten (84), mit dem der Öffnungs- und Schließvorgang des Steuerventils unabhängig voneinander steuerbar sind, betätigten Schaft (76) und wenigstens zwei starr mit dem Schaft verbundene "Schließglieder" (78) aufweist, die mit zugehörigen in einer Trennwand (70) eines Saugrohrs (24, 36) angeordneten Ventilöffnungen (72) derart zusammenwirken, dass sich die an den Schließgliedern wirksamen Druckunterschiede kompensieren.

15. Vorrichtung nach Anspruch 14,
**dadurch gekennzeichnet, dass** der Schaft (76) das Saugrohr (24, 36) quer durchdringt und mittels des Elektromagneten (84) in seiner Längsrichtung beweglich ist, und dass die Schließglieder als den Schaft umschließende Scheiben (78) ausgebildet sind, die in der im Längsschnitt durch das Saugrohr mäanderförmigen Trennwand (70) vorgesehen sind, wobei bezogen auf die Richtung der Strömung durch das Saugrohr die Scheiben in geöffnetem Zustand des Steuerventils auf unterschiedlichen Seiten der Ventilöffnungen angeordnet sind.

16. Vorrichtung nach Anspruch 15,
**dadurch gekennzeichnet, dass** vier Ventilöffnungen (72) mit zugehörigen Scheiben (78) vorgesehen sind.

## Claims

1. Method for controlling the composition of the combustible air-fuel mixture present in a combustion chamber of a spark-ignited internal combustion engine having external mixture formation, such that the mixture has a predetermined composition, the internal combustion engine comprising a first mixture generating device for generating a rich mixture having a predetermined air-fuel ratio and a second mixture generating device for generating a lean mixture having a predetermined air-fuel ratio, in which method
- at least two fluids with particular air-fuel ratios are generated,
- the fluids are supplied to the combustion chamber and
- the quantity proportions of the fluids are controlled such that their totalized composition corresponds to the predetermined composition,
**characterized in that** the both fluids are generated independently from each other such that their particular air-fuel ratios are free controllable independent of their respective flow rates, the both fluids are first mixed with each other in the combustion chamber and their quantity control takes place shortly before or upon their entrance into the combustion chamber.

2. Method according to claim 1, **characterized in that** the quantity of the air-fuel mixture flowing into the cylinder during an intake stroke is controlled by the opening duration and, if applicable, additionally by the openings of respective control valves allocated to both fluids and disposed in corresponding inlets of the combustion chamber.

3. Method according to claim 1 or 2, **characterized in that** one fluid is a rich air-fuel mixture and the other fluid is a lean air-fluid mixture, wherein the rich air-fuel mixture has a predetermined higher fuel content and the lean air-fluid mixture has a predetermined lower fuel content than the mixture having the predetermined composition which is to be supplied to the combustion chamber.

4. Method according to claim 1 or 2, **characterized in that** a fluid being free of fuel is supplied to the combustion chamber as the sole fluid during a time period, during which at least one intake valve and at least one exhaust valve of the combustion chamber are simultaneously opened.

5. Method according to any one of claims 1 to 4, **characterized in that** the fuel mixed with the air is a combustible gas.

6. Apparatus for controlling the composition of the combustible air-fuel mixture present in a combustion chamber of a spark-ignited internal combustion engine having external mixture formation, such that the mixture has a predetermined composition, comprising
- a first mixture generating device (16, 18, 40) for generating a rich mixture having a predetermined air-fuel ratio,
- a second mixture generating device (28, 30, 42) for generating a lean mixture having a predetermined air-fuel ratio,
wherein both mixtures are generated by adding fuel to fresh air, which is supplied to the internal combustion engine, and the rich mixture has a higher fuel proportion and the lean mixture has a lower fuel proportion than the mixture having the predetermined composition,
- a first device (22, 24) for supplying the rich mixture to a first intake leading into a combustion chamber of the internal combustion engine,
- a second device (34, 36) for supplying the lean mixture to a second intake leading into a combustion chamber of the internal combustion engine,
- a first valve device (26, 27), which operates in the first intake, for controlling the quantity of the rich mixture supplied to the combustion chamber,
- a second valve device (38, 39), which operates in the second intake, for controlling the quantity of the lean mixture supplied to the combustion chamber, and
- a control device (44) for controlling the valve devices such that the sum of the quantities of the rich mixture and of the lean mixture flowing into the combustion chamber results in a mixture having the predetermined composition,
**characterized in that** the internal combustion engine comprises a plurality of cylinders (4) and two intake-side manifolds (22, 34), one of which supplies the rich mixture and the other of which supplies the lean mixture, and which manifolds are connected with each one of the intakes of the cylinders via individual intake pipes (24, 36).

7. Apparatus according to claim 6, wherein the control device (44) controls the valve device in a cylinder-selective manner and/or in a cycle-selective manner.

8. Apparatus according to claim 6 or 7, wherein each of the valve devices comprises an intake valve (27, 39) directly abutting on the combustion chamber and a control valve (26, 38) that is controllable independent of the intake valve with respect to its opening time and/or its closing time and/or its opening cross-section.

9. Apparatus according to claim 6 or 7, wherein each of the valve devices comprises an intake valve (27, 39) directly abutting on the combustion chamber, the opening time and/or the closing time and/or the opening cross-section of the intake valve being controllable.

10. Apparatus according to claim 8 or 9, wherein the controlling of the mixture composition supplied into the combustion chamber takes place such that the controllable valves (26, 38; 27, 39) have the same valve timings and different valve strokes.

11. Apparatus according to claim 8 or 9, wherein the controlling of the mixture composition supplied into the combustion chamber takes place such that the controllable valves (26, 38; 27, 39) have unequal valve timings.

12. Apparatus according to any one of claims 6 to 11, wherein each of the mixture generating devices comprises a fuel metering device (30, 40) that is arranged upstream of a compressor (20, 32).

13. Apparatus according to claim 12, wherein each of the compressors (20, 32) is driven by an exhaust turbine that is driven by the exhaust gas of the internal combustion engine.

14. Apparatus according to claim 8, wherein the control valve (26, 38) comprises a valve member (74) having a shaft (76) that is actuated by an electromagnet (84), by which the opening-operation and the closing-operation of the control valve are controllable independently of each other, and at least two "closing members" (78) rigidly connected with the shaft, which closing members cooperate with the associated valve openings (72) located in a partition wall (70) of an intake pipe (24, 36), such that the pressure differences acting on the closing members are compensated.

15. Apparatus according to claim 14,
**characterized in that** the shaft (76) transversely penetrates through the intake pipe (24, 36) and is movable in its longitudinal direction by means of the electromagnet (84), and the closing members are constructed as disks (78) surrounding the shaft, which disks are disposed in the partition wall (70), which is meander-shaped in a longitudinal section through the intake pipe, wherein in the opened state of the control valve the disks are arranged on different sides of the valve openings with respect to the direction of the flow through the intake pipe.

16. Apparatus according to claim 15,
**characterized in that** four valve openings (72) are provided with associated disks (78).

## Revendications

1. Procédé pour réguler la composition du mélange air-carburant combustible présent dans une chambre de combustion d'un moteur à combustion interne à allumage commandé avec formation extérieure du mélange, de telle manière qu'il présente une composition prédéterminée, dans lequel le moteur à combustion interne comprend un premier dispositif de formation de mélange destiné à produire un mélange riche avec un rapport air-carburant prédéterminé et un second dispositif de formation de mélange destiné à produire un mélange pauvre avec un rapport air-carburant prédéterminé, procédé dans lequel
- on produit au moins deux fluides avec un rapport air-carburant respectif,
- on envoie les fluides à la chambre de combustion, et
- on régule les proportions des fluides de telle manière que leur composition cumulée corresponde à la composition prédéterminée,
**caractérisé en ce que** l'on produit les deux fluides indépendamment l'un de l'autre, de telle manière que leur rapport air-carburant respectif puisse être régulé librement indépendamment de leur débit respectif, les deux fluides ne se mélangent l'un à l'autre que dans la chambre de combustion et leur régulation quantitative n'est effectuée que peu avant ou lors de leur entrée dans la chambre de combustion.

2. Procédé selon la revendication 1, **caractérisé en ce que** l'on régule la quantité du mélange air-carburant pénétrant dans le cylindre lors d'une course d'aspiration par la durée d'ouverture et le cas échéant en plus l'ouverture de soupapes de commande disposées dans des admissions correspondantes dans la chambre de combustion et associées aux deux fluides.

3. Procédé selon la revendication 1 ou 2, **caractérisé en ce qu'**un fluide est un mélange air-carburant riche et l'autre fluide est un mélange air-carburant pauvre, dans lequel le mélange air-carburant riche présente une teneur en carburant plus élevée prédéterminée et le mélange air-carburant pauvre présente une teneur en carburant plus basse prédéterminée que le mélange avec la composition prédéterminée à envoyer à la chambre de combustion.

4. Procédé selon la revendication 1 ou 2, **caractérisé en ce que** l'on envoie à la chambre de combustion un fluide sans carburant comme fluide unique pendant un laps de temps, pendant lequel au moins une soupape d'admission et une soupape d'échappement de la chambre de combustion sont simultanément ouvertes.

5. Procédé selon l'une quelconque des revendications 1 à 4, **caractérisé en ce que** le carburant ajouté à l'air est un gaz combustible.

6. Dispositif pour réguler la composition du mélange air-carburant combustible présent dans une chambre de combustion d'un moteur à combustion interne à allumage commandé avec formation extérieure du mélange, de telle manière qu'il présente une composition prédéterminée, comprenant
- un premier dispositif de formation de mélange (16, 18, 40) destiné à produire un mélange riche avec un rapport air-carburant prédéterminé,
- un second dispositif de formation de mélange (28, 30, 42) destiné à produire un mélange pauvre avec un rapport air-carburant prédéterminé, dans lequel les deux mélanges sont produits en ajoutant du carburant dans de l'air frais envoyé au moteur à combustion interne et le mélange riche présente une proportion de carburant plus élevée et le mélange pauvre présente une proportion de carburant plus basse que le mélange avec la composition prédéterminée,
- un premier dispositif (22, 24) destiné à envoyer le mélange riche à une première admission conduisant dans une chambre de combustion du moteur à combustion interne,
- un second dispositif (34, 36) destiné à envoyer le mélange pauvre à une seconde admission conduisant dans une chambre de combustion du moteur à combustion interne,
- un premier agencement de soupapes (26, 27) opérant dans la première admission, destiné à réguler la quantité du mélange riche envoyé à la chambre de combustion,
- un second agencement de soupapes (38, 39) opérant dans la seconde admission, destiné à réguler la quantité du mélange pauvre envoyé à la chambre de combustion, et
- un dispositif de régulation (44) destiné à réguler les agencements de soupapes de telle manière que la somme de la quantité du mélange riche et du mélange pauvre pénétrant dans la chambre de combustion donne un mélange avec la composition prédéterminée,
**caractérisé en ce que** le moteur à combustion interne comprend plusieurs cylindres (4) et deux tubes collecteurs (22, 34) côté admission, dont l'un transporte le mélange riche et l'autre le mélange pauvre et qui sont raccordés respectivement à une des admissions des cylindres au moyen de tubulures d'admission individuelles (24, 36).

7. Dispositif selon la revendication 6, dans lequel le dispositif de régulation (44) régule l'agencement de soupapes sélectivement selon les cylindres et/ou sélectivement selon les cycles.

8. Dispositif selon l'une quelconque des revendications 6 ou 7, dans lequel chacun des agencements de soupapes comprend une soupape d'admission (27, 39) immédiatement adjacente à la chambre de combustion et une soupape de commande (26, 38) pouvant être régulée indépendamment de la soupape d'admission en ce qui concerne son instant d'ouverture et/ou de fermeture et/ou sa section d'ouverture.

9. Dispositif selon l'une quelconque des revendications 6 ou 7, dans lequel chacun des agencements de soupapes comprend une soupape d'admission (27, 39) immédiatement adjacente à la chambre de combustion, dont on peut réguler l'instant d'ouverture et/ou de fermeture et/ou la section d'ouverture.

10. Dispositif selon la revendication 8 ou 9, dans lequel la régulation de la composition du mélange envoyé à la chambre de combustion est effectuée par le fait que les soupapes pouvant être régulées (26, 38; 27, 39) présentent des instants de commande identiques et des courses de soupape différentes.

11. Dispositif selon la revendication 8 ou 9, dans lequel la régulation de la composition du mélange envoyé à la chambre de combustion est effectuée par le fait que les soupapes pouvant être régulées (26, 38; 27, 39) présentent des instants de commande différents.

12. Dispositif selon l'une quelconque des revendications 6 à 11, dans lequel chacun des dispositifs de formation de mélange comprend un dispositif de dosage de carburant (30, 40), qui est disposé en amont d'un compresseur (20, 32).

13. Dispositif selon la revendication 12, dans lequel chacun des compresseurs (20, 32) est entraîné par une turbine à gaz d'échappement entraînée par les gaz d'échappement du moteur à combustion interne.

14. Dispositif selon la revendication 8, dans lequel la soupape de commande (26, 38) comprend un organe de soupape (74) avec une tige (76) actionnée par un électroaimant (84), avec lequel les opérations d'ouverture et de fermeture de la soupape de commande peuvent être régulées indépendamment l'une de l'autre, et au moins deux "organes de fermeture" (78) assemblés rigidement à la tige, qui coopèrent avec des ouvertures de soupape correspondantes (72) disposées dans une paroi de séparation (70) d'une tubulure d'admission (24, 36), de telle manière que les différences de pression agissant sur les organes de fermeture se compensent.

15. Dispositif selon la revendication 14, **caractérisé en ce que** la tige (76) traverse transversalement la tubulure d'admission (24, 36) et est mobile dans sa direction longitudinale au moyen de l'électroaimant (84), et **en ce que** les organes de fermeture sont réalisés sous la forme de disques (78) entourant la tige, qui sont prévus dans la paroi de séparation (70) de forme sinueuse dans une coupe longitudinale à travers la tubulure d'admission, dans lequel, par rapport à la direction de l'écoulement à travers la tubulure d'admission, les disques sont disposés sur des côtés différents des ouvertures de soupape, dans la position ouverte de la soupape de commande.

16. Dispositif selon la revendication 15, **caractérisé en ce qu'**il est prévu quatre ouvertures de soupape (72) avec des disques correspondants (78).
